# EUROPEAN PATENT APPLICATION

(11) **EP 4 786 093 A1**
(43) Date of publication of application: **05.08.2026**
(21) Application number: 26155712.8
(22) Date of filing: 02.02.2026
(51) Int. Cl.: B23Q 11/08, F16P 1/02

(54) **PROTECTIVE DEVICE AND PROCESSING MACHINE**

(30) Priority: 03.02.2025 IT 202500001947
(71) Applicant: P.E.I. Protezioni Elaborazioni Industriali S.r.l., 40012 Calderara di Reno (Bologna) (IT)
(72) Inventor: BENEDETTI, Michele, 40033 CASALECCHIO DI RENO (BOLOGNA) (IT); MARDEGAN, Vittorio, 26037 SAN GIOVANNI IN CROCE (CREMONA) (IT)
(74) Representative: Milli, Simone

(57) **Abstract**

A protective device (1) comprising a protective module (2) is provided. The protective module (2) comprising:
- at least one substantially L-shaped lamella (3);
- at least one frame (4) transversely arranged to at least one lamella (3) and configured to be removably coupled to at least one lamella (3);
- coupling means (5) comprising at least one slot (6) obtained on the lamella (3) and/or on the frame (4) and a coupling element (7, 8), the coupling element (7, 8) being configured to be removably introduced in the at least one slot (6) of the lamella (3) and/or frame (4).

## Description

The present invention relates to a protective device.

The present invention relates also to a processing machine comprising the protective device object of the present invention.

In such a context, the protective device and the processing machine object of the present invention can be advantageously used in the field of the machine tools of production plants.

In such a field, the need for protective devices of the moving portions of the machine in order to anticipate the accidental access of the operators to dangerous portions of the machine is known.

It is also known the need to protect the machine tools from the chips forming during processing, and from working liquids.

In the prior art, it is known the need for processing machines provided with protective devices, compact and simple to be mounted on the same machine.

Such protective devices are generally made up of lamellae coupled to a frame, in turn fixed to the processing machine.

So, it is important that the lamellae are stably and safely coupled to the frame by means of suitable coupling elements, in order to guarantee an efficient protection of the operators near the moving portions of the machine.

A problem with such application is the difficulty to couple the lamellae to the frame to obtain the entire protective device.

Therefore, a particular need of the field concerned is to make the fixing of the single lamella to the frame more immediate and easier, so to facilitate the mounting operations of the protective device.

Furthermore, since the coupling of single lamella and frame is simplified, it is possible to disassemble the protective device easily in case of maintenance of the protective device and/or in case of replacement of one or more elements of the same device.

So, the technical objective of the present invention is to provide a protective device and a processing machine comprising said device, which are able to overcome the drawbacks of the prior art and to meet the above-mentioned needs.

Therefore, aim of the present invention is to provide a protective device and a processing machine comprising said device, whose elements are easily to be mounted.

The specified technical objective and aim are substantially reached by a protective device and a processing machine comprising the technical features described in any one of the appended claims.

The dependent claims, provided in the following for reference, correspond to different embodiments of the invention.

In particular, according to an aspect of the present description a protective device comprising a protective module is provided.

The protective module comprises at least one lamella, at least one frame and coupling means.

Preferably, the at least one lamella is substantially L-shaped.

According to an aspect of the present description, the lamella is provided with a first portion orthogonal to a second portion.

Preferably, the at least one frame is transversely arranged to the at least one lamella.

According to an aspect of the present description, the at least one frame is parallel to the first portion and transverse to the second portion of the at least one lamella.

The frame is configured to be removably coupled to at least one lamella. The protective module comprises also coupling means.

According to an embodiment, the coupling means comprise at least a slot obtained on the slot and/or on the frame and a coupling element. Preferably, the coupling element is obtained on the lamella and/or on the frame.

The coupling element is configured to be removably introduced in the cited at least one slot of the lamella and/or frame.

Preferably, according to the present embodiment the coupling means comprise a slot obtained on the lamella and a coupling element obtained on the frame.

According to another embodiment, the coupling means comprise a slot obtained on the frame and a coupling element obtained on the lamella. The coupling means are configured to provide a shape coupling between slot and coupling element.

Preferably, the coupling means are configured to provide a snap-on coupling between slot and coupling element.

More preferably, the protective device comprises a reinforcing element configured to be introduced in the slot obtained on the lamella and/or on the frame in order to facilitate the coupling between lamella and frame. According to another embodiment, the coupling means comprise a plurality of slots obtained on the lamella and the frame, respectively. Preferably, the coupling element is provided in the form of a latch having T-shape.

The latch makes the coupling between lamella and frame possible, since its elongated portion is shaped or deformable to be introduced in the plurality of slots obtained on the lamella and the frame.

Object of the present invention is also a processing machine comprising a processing head, an actuator and the protective device object of the present invention.

According to another aspect of the present description, the processing head comprises a processing tool and the actuator is connected to the processing head. The actuator is also configured to move the processing head in an operating area.

Furthermore, the processing machine comprises a protective device according to the present invention.

Preferably, the protective device is connected to the processing head to be integrally movable with the processing head, so as to cover at least a portion of said operating area.

Further technical features of the present invention, and advantages thereof, will be clearer from the following detailed description, made with reference to the appended drawings, which represent various purely illustrative and not limiting embodiments of other embodiments of the same device, in which:
- figure 1 shows an overall schematic view of an embodiment of the protective device object of the present invention;
- figure 2 shows an exploded front view of a first embodiment of the lamella and frame of the protective device object of the present invention;
- figures 3A and 3B show a detail, in an enlarged view, of the lamella and frame shown in figure 2, respectively;
- figures 4A and 4B show a detail, in an enlarged view, of the coupling between the frame and lamella shown in figure 2;
- figure 5 shows an exploded front view of a second embodiment of the frame and lamella of the protective device object of the present invention;
- figure 6A and 6B show a detail, in an enlarged view, of the lamella and frame shown in figure 5, respectively;
- figures 7A and 7B show a detail, in an enlarged view, of the coupling between the frame and lamella shown in figure 5;
- figure 8 shows an exploded front view of a third embodiment of the frame and lamella of the protective device object of the present invention;
- figures 9A and 9B show a detail, in an enlarged view, of the lamella and frame shown in figure 8, respectively;
- figures 10A and 10B show a detail, in an enlarged view, of the coupling between the frame and lamella shown in figure 8;
- figure 11 shows a perspective view of a fourth embodiment of the lamella and frame with a reinforcing element of the protective device object of the present invention;
- figure 12 shows an exploded front view of the fourth embodiment of the frame and lamella of the protective device object of the present invention;
- figures 13A and 13B show a detail, in an enlarged view, of the coupling between the lamella and frame with the reinforcing element of the protective device shown in figure 11;
- figure 14 shows an overall perspective view of the fourth embodiment of the protective device object of the present invention;
- figure 15 shows another perspective view of the view shown in figure 14;
- figures 16A - 16B show a perspective view of the coupling shown in figures 13A and 13B;
- figure 17 shows an exploded perspective view of a fifth embodiment of the lamella and frame of the protective device object of the present invention;
- figure 18 shows an exploded front view of the embodiment shown in figure 17;
- figures 19A - 19B show a detail, in an enlarged view, of the lamella and frame shown in figure 18, respectively;
- figures 20A - 20B show a detail, in an enlarged view, of the coupling between the frame and lamella of figure 18;
- figure 21 shows an exploded perspective view of a sixth embodiment of the lamella and frame with the reinforcing element of the protective device object of the present invention;
- figure 22 shows a front schematic view of the sixth embodiment of the frame and lamella of the protective device object of the present invention;
- figures 23A and 23B show a detail, in an enlarged view, of the coupling between the lamella and frame with the reinforcing element of the protective device of figure 21;
- figure 24 shows an overall perspective view of the coupling between the lamella and frame with the reinforcing element;
- figure 25 shows another perspective view of the view shown in figure 24;
- figures 26A and 26B show a perspective view of the coupling shown in figures 23A and 23B;
- figure 27 shows an exploded perspective view of a seventh embodiment of the lamella and frame with the reinforcing element of the protective device object of the present invention;
- figure 28 shows an exploded front schematic view of the seventh embodiment of the frame and lamella of the protective device object of the present invention;
- figures 29A and 29B show a detail, in an enlarged view, of the lamella and frame shown in figure 28, respectively;
- figure 30 shows a detail, in an enlarged view, of the coupling between the lamella and frame shown in figure 27.

With reference to the appended figures, the reference number 1 indicates the entire protective device according to the present invention, which, for simplicity, will be indicated as device 1 in the following.

According to the appended figures, the device 1 comprises at least a protective module 2.

The protective module 2 comprises at least one lamella 3, at least one frame 4 and coupling means 5.

The lamella 3 is substantially L-shaped.

With substantially L-shaped it is meant a lamella 3 having two portions orthogonal to each other. In other words, the lamella 3 has a first portion and a second portion. The first portion of the lamella 3 is orthogonal to the second portion.

The frame 4 is transversely arranged to a lamella 4. The frame 4 is parallel to the first portion of the lamella 3 and transverse to the second portion of the lamella 3.

The frame 4 is configured to be removably coupled to the lamella 3.

The protective module 2 comprises also coupling means 5. The coupling means 5 comprise at least a slot 6 obtained on the lamella 3 and/or the frame 4.

The coupling means 5 comprise at least a coupling element 7, 8. According to some embodiments, the coupling element 7 is obtained on the lamella and/or the frame.

The coupling element 7, 8 is configured to be removably introduced in the slot 6 obtained on the lamella 3 and/or the frame 4.

According to an aspect of the present description, during usage and so the coupling between lamella 3 and frame 4, the lamella 3 is deformed to the frame, at the coupling means 5 arranged on the lamella 3 and on the frame 4.

The deformation of the lamella 3 to the frame 4 occurs at the at least one slot 6 and at a coupling element 7, 8.

In other words, during usage of the device 1 a deformation of the lamella and/or frame occurs at the coupling elements 5.

The coupling means 5 are configured to provide a shape and/or snap-on coupling between lamella 3 and frame 4.

Advantageously, the lamella 3 and the frame 4 of the protective module 2 do not need other fixing means, as for example rivets, to be coupled. The coupling means 5 obtained on the same lamella 3 and/or the frame 4, by means of their deformation, guarantee a simple coupling between lamella 3 and frame 4, that remain stably coupled.

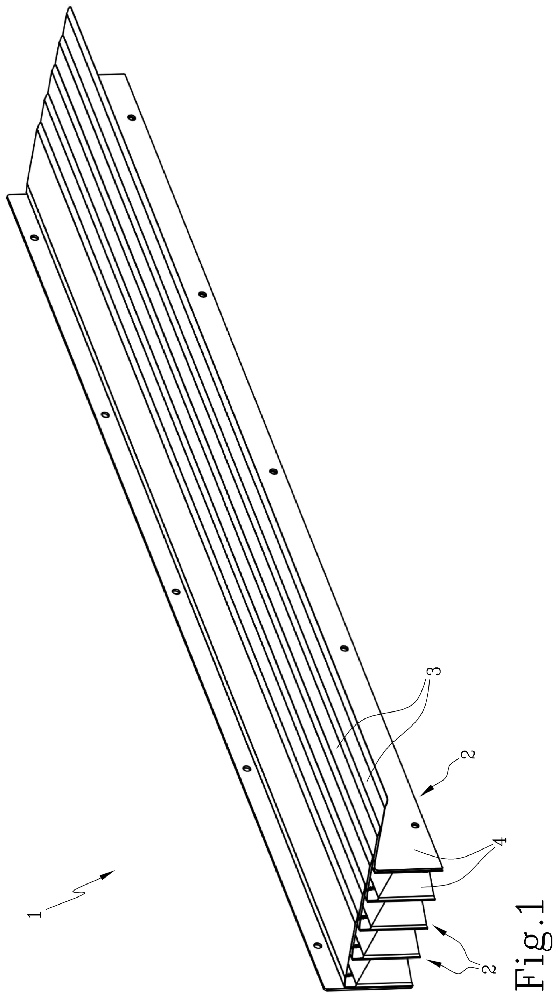

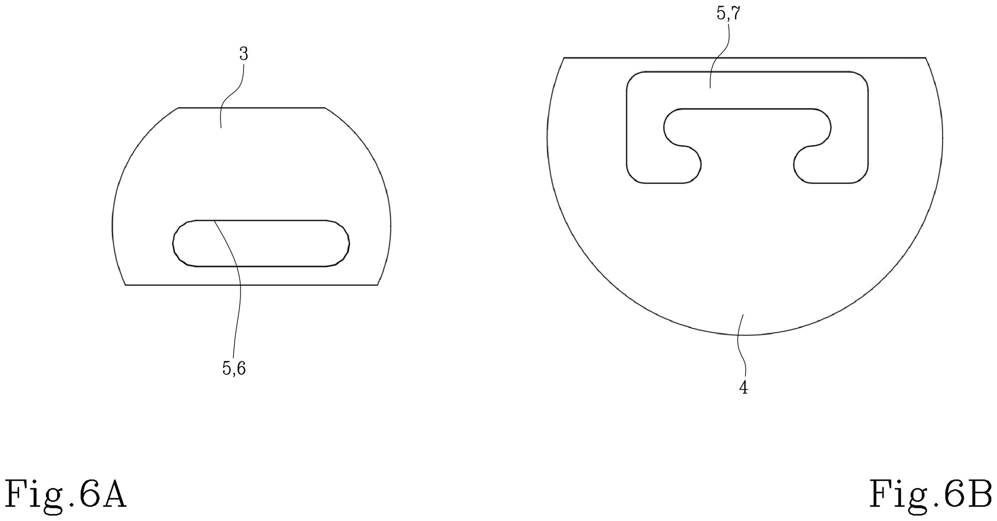

According to the embodiments shown in figures 1 to 7B, the coupling means 5 comprise at least a slot 6 obtained on the lamella 3 and a coupling element 7 obtained on the frame 4.

The slot 6 has elongated shape in a direction according to the main extension direction of the lamella 3.

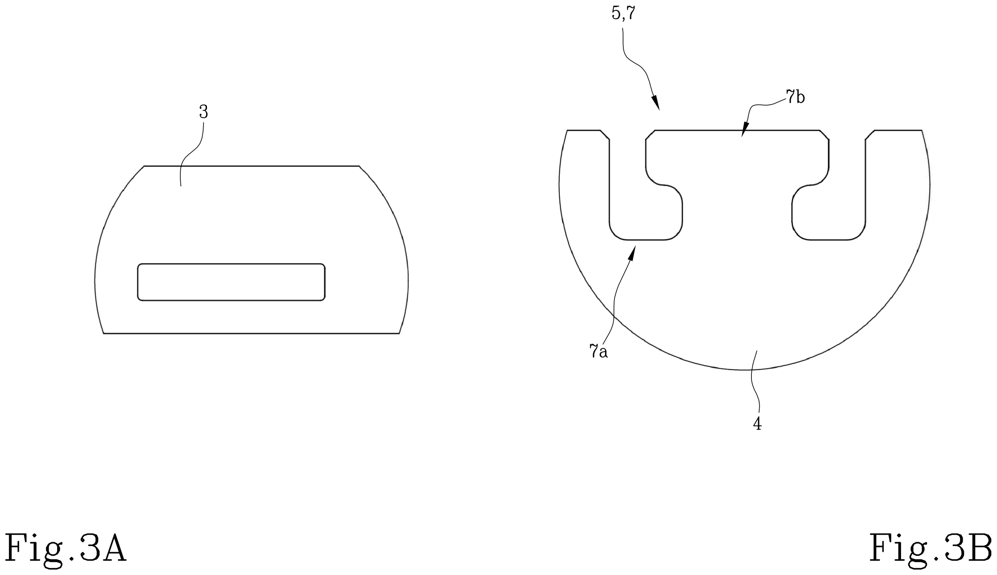

According to the embodiment shown for example in figure 3B, the coupling element 7 has a first portion 7a and a second portion 7b.

The first portion 7a is a connecting portion to the frame 4.

The second portion 7b is an enlarged and distal portion to the frame 4.

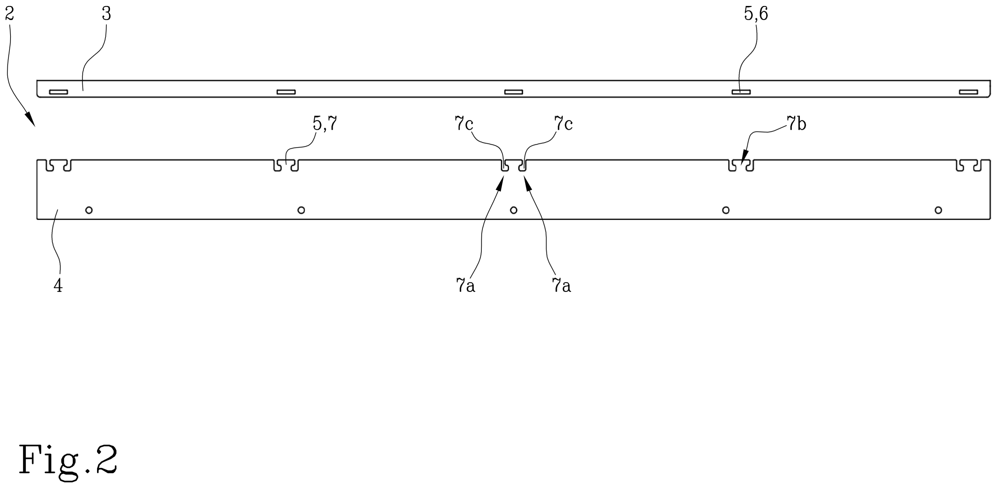

In other words, the portion 7a is an intermediate portion of the coupling element 7 between the body of the frame 4, on which the coupling element 7 is obtained, and the second portion 7b of the same coupling element 7. According to an aspect shown in figure 2, each portion 7a of the coupling element 7 is obtained by providing a groove at an edge portion of the frame 4. So, the coupling element 7 is defined by means of two openings 7c provided on the edge of the frame 4.

The second portion 7b of the coupling element 7 is introduced, while being used, in the slot 6 obtained on the lamella 3 in order to provide the coupling between the frame 4 and the lamella 3.

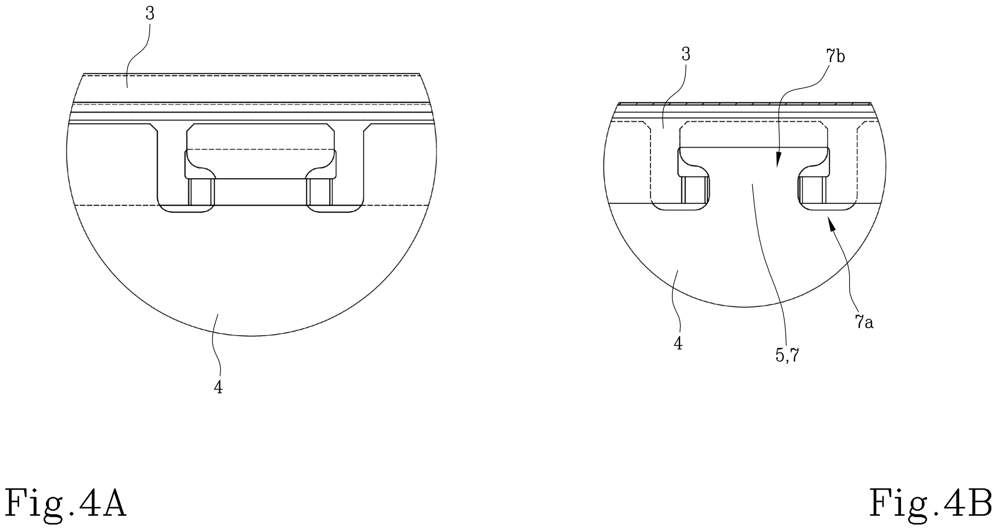

According to the details shown in figures 4A and 4B, the lamella 3 is deformed to the frame 4 at the coupling elements 5.

The deformation of the lamella 3 to the frame 4 occurs at the slot 6. The second portion 7b of the coupling element 7 is introduced in the slot 6 so to define a shape coupling between the coupling element 7 and the slot 6. In other words, between the coupling element 7 and the slot 6 a snap-on coupling is provided.

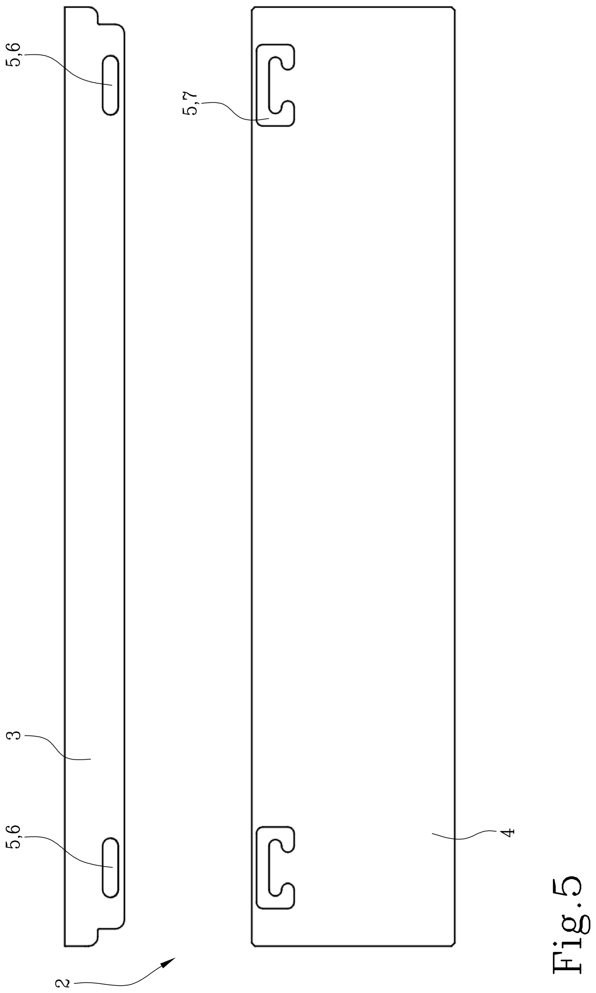

According to an aspect shown in figure 5, the coupling element 7 is obtained by means of an inner groove of the frame 4.

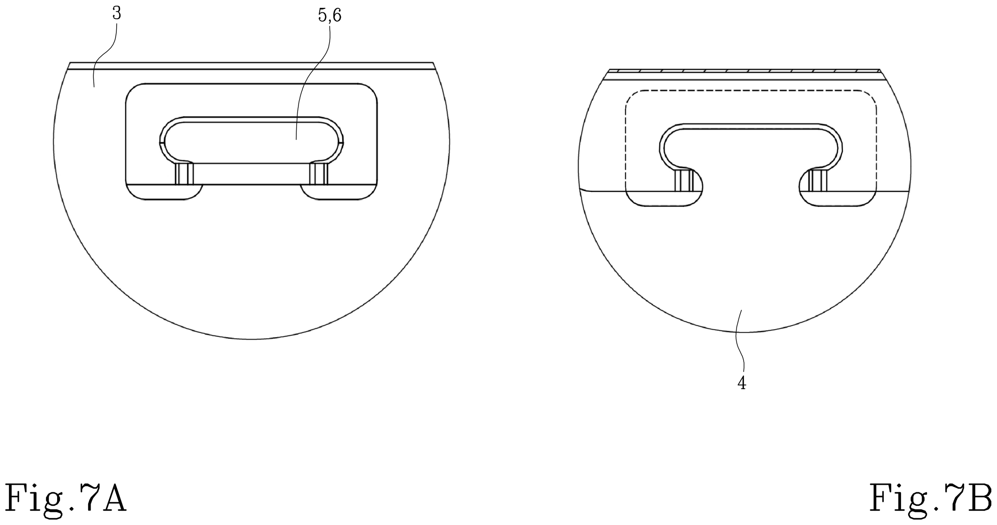

With inner groove of the frame 4 it is meant a groove defined in the space comprised between an upper edge and a lower edge of the frame 4. According to the details shown in figures 7A and 7B, the lamella 3 is deformed to the frame 4 at the coupling elements 5.

Advantageously, between the frame 4 and the lamella 3 a snap-on coupling is provided, that avoids the introduction of other coupling elements to guarantee the coupling between the frame 4 and the lamella 3.

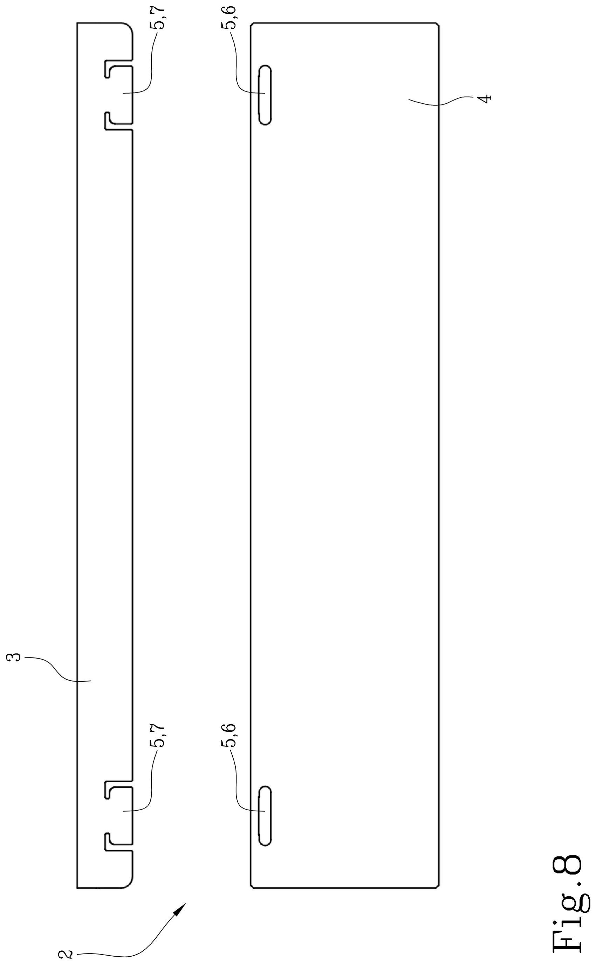

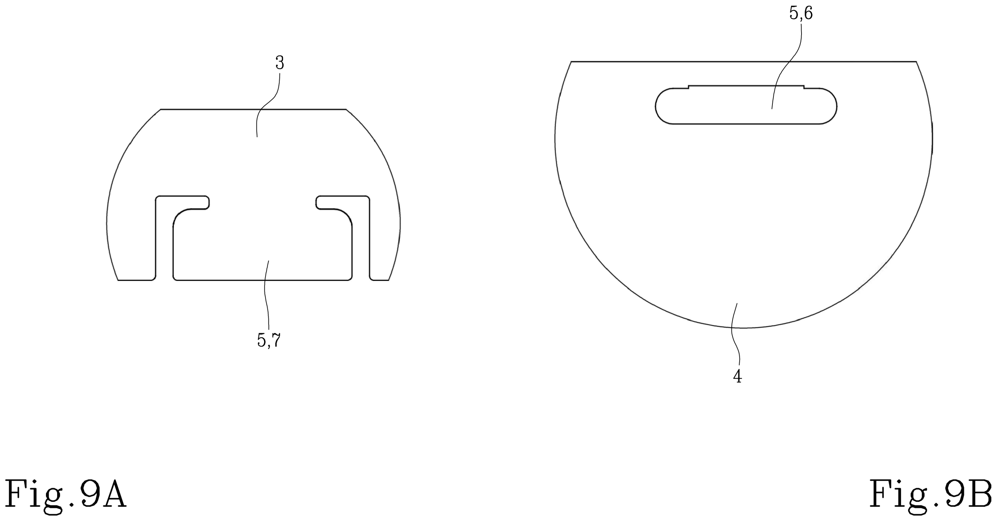

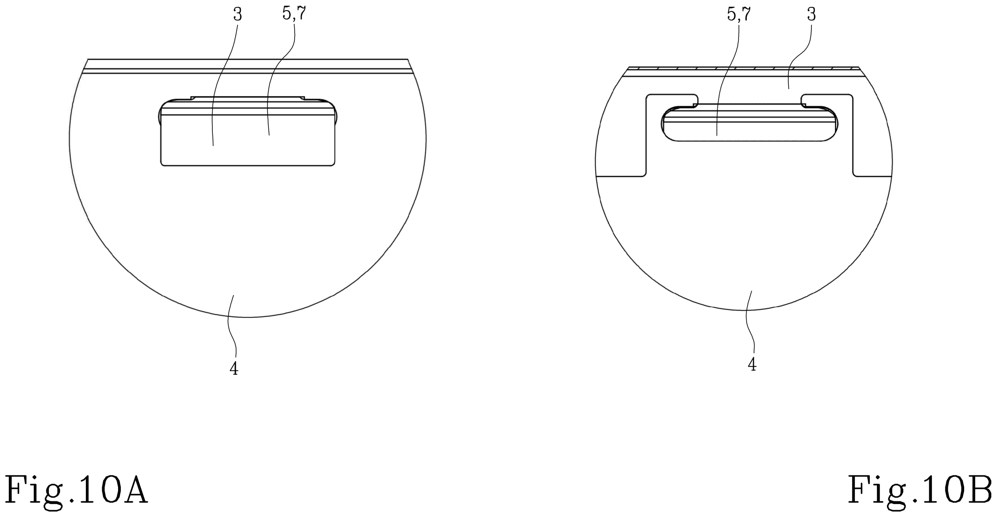

According to the embodiments shown in figures 8 to 10, the coupling means 5 comprise a slot 6 obtained on the frame 4 and a coupling element 7 obtained on the lamella 3.

The slot 6 has an oval elongated shape.

The coupling between lamella 3 and frame 4 occurs at the slot 6, obtained on the frame 4, and at the coupling element 7, obtained on the lamella 3.

Advantageously, the embodiment shown in figures 8 to 10 allows to provide a snap-on coupling between the frame 4 and the lamella 3 that avoids the introduction of other coupling elements to guarantee the coupling between frame 4 and lamella 3.

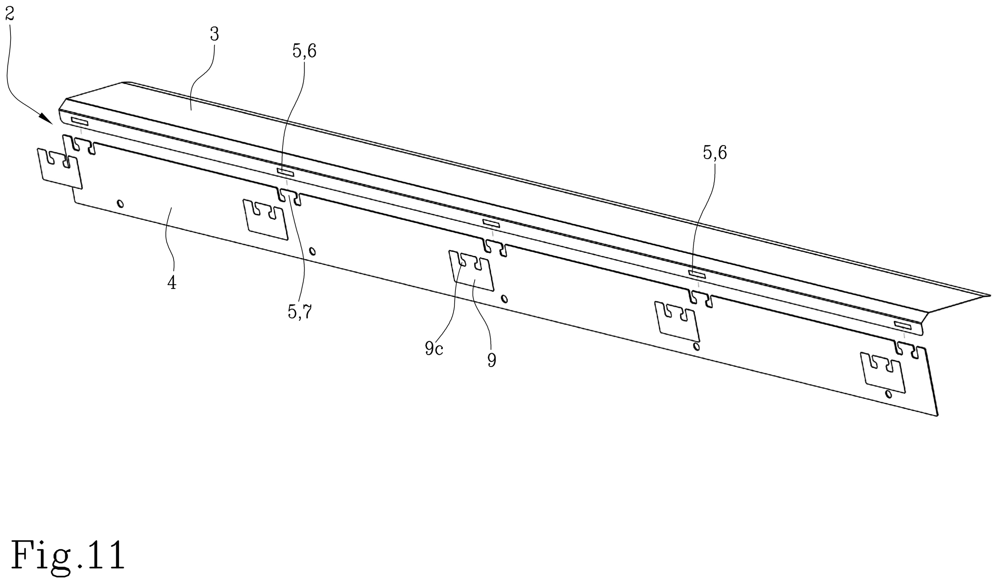

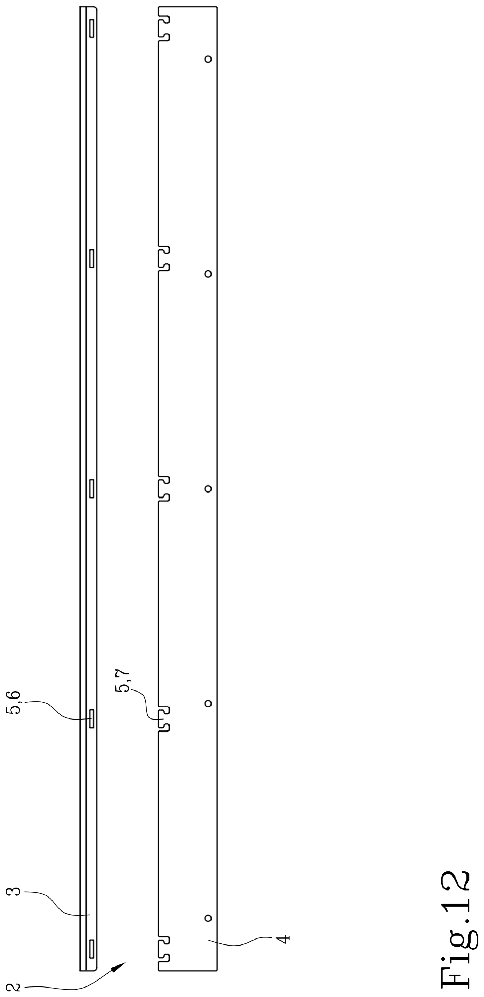

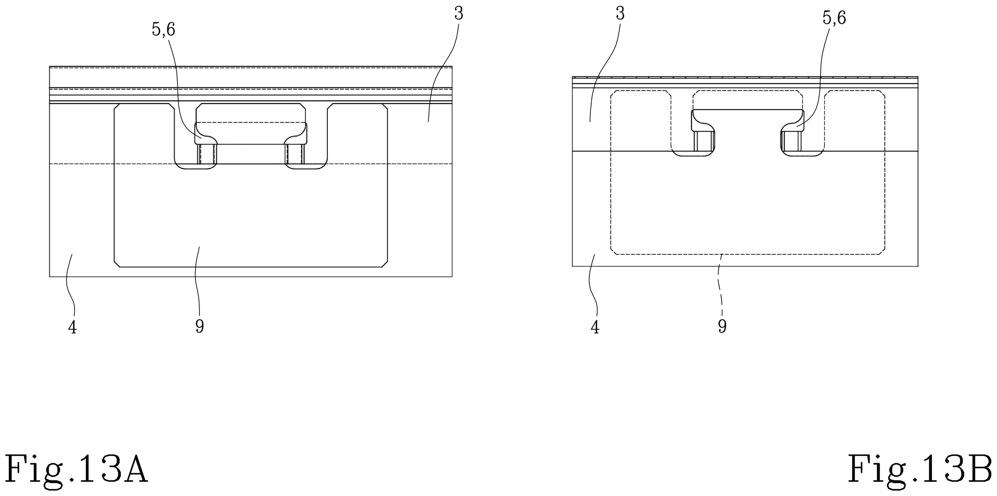

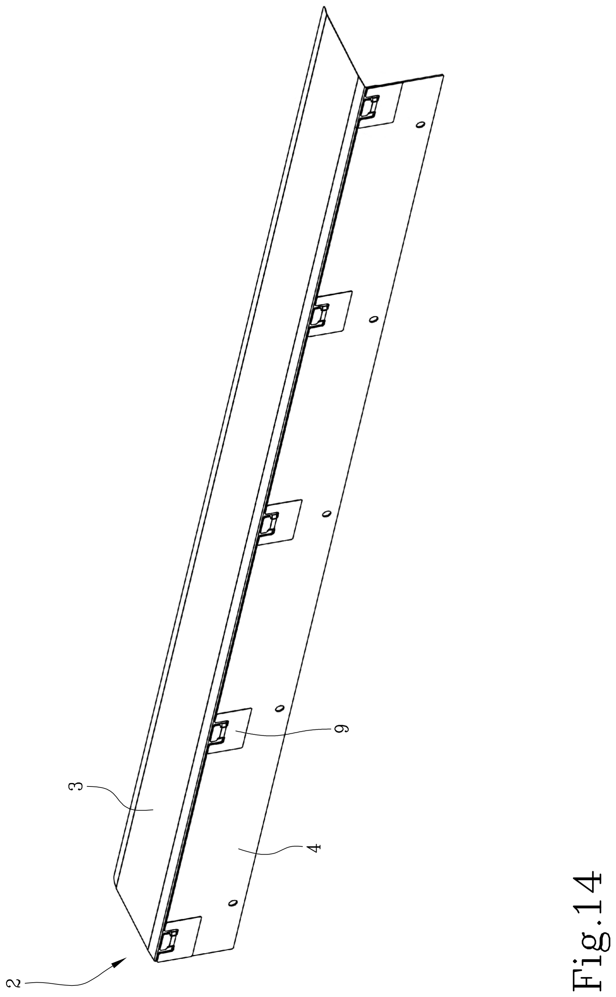

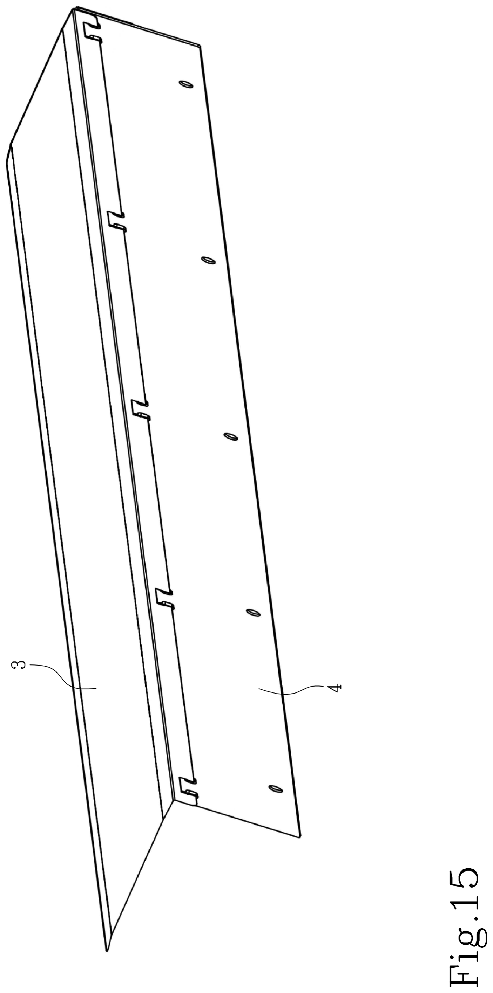

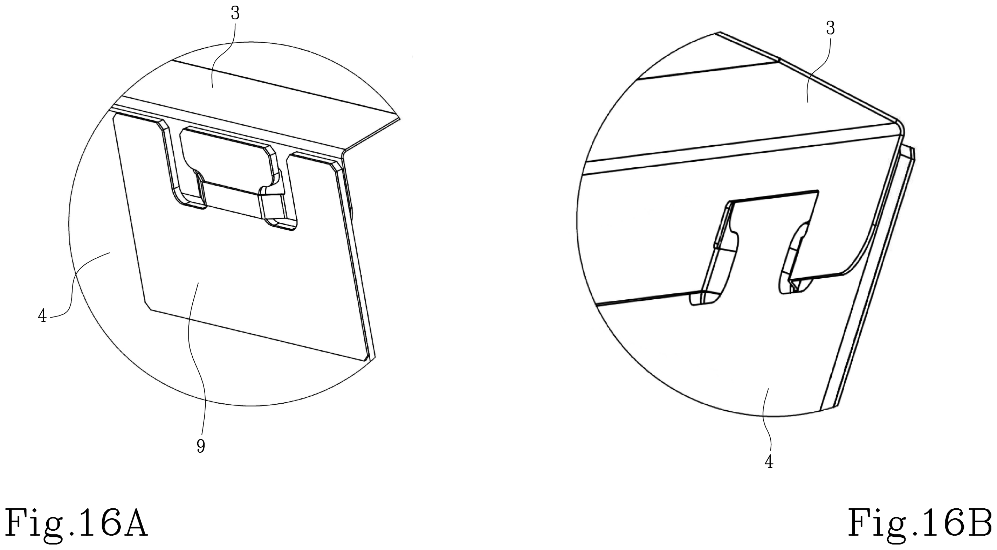

According to another aspect shown in figures 11 to 16, the coupling means 5 comprise a slot 6 obtained on the lamella 3 and a coupling element 7 obtained on the frame 4.

According to an aspect (well shown in figures 11, 13A, 13B, 14, 16A and 16B), the device 1 comprises at least a reinforcing element 9 configured to be introduced in a slot 6 obtained on the lamella 3 and/or on the frame 4 to facilitate the coupling between said lamella 3 and said frame 4.

The reinforcing element 9 is configured to be introduced in the slot 6 obtained on the lamella 3.

According to the embodiment shown in figures 11, 13A, 13B, 14 and 16A and 16B, the slot 6 in configured to house the coupling element 7 and the reinforcing element 9.

Advantageously, the introduction of the reinforcing element 9 facilitates the coupling between lamella 3 and frame 4.

Moreover, the reinforcing element 9 introduced in the slot 6 allows to provide a more stable and solid snap-on coupling between lamella 3 and frame 4.

The reinforcing element 9 avoids that a mutual movement occurs between lamella 3 and frame 4.

The reinforcing element 9 is provided with a groove at an edge portion of the same element. So, the reinforcing element 9 is defined by means of two openings 9c provided at an edge portion of the frame 4.

The coupling between lamella 3 and frame 4 occurs at the coupling means 5.

The coupling element 7 is introduced in the slot 6 of the lamella 3 and, inside the same slot 6, it is introduced the reinforcing element 9.

The reinforcing element 9 is introduced in the slot 6 and contacts the same avoiding the contact between slot 6 and coupling element 7. Moreover, the reinforcing element 9 avoids that during the snap-on coupling between lamella 3 and frame 4, the steel lamella 3 cuts the frame 4 at their contact point.

Advantageously, the introduction of the reinforcing element 9 in the coupling between lamella 3 and frame 4 allows to reduce the wear of the frame 4.

Advantageously, the introduction of the reinforcing element 9 allows to optimize and to make the coupling between lamella 3 and frame 4 more stable.

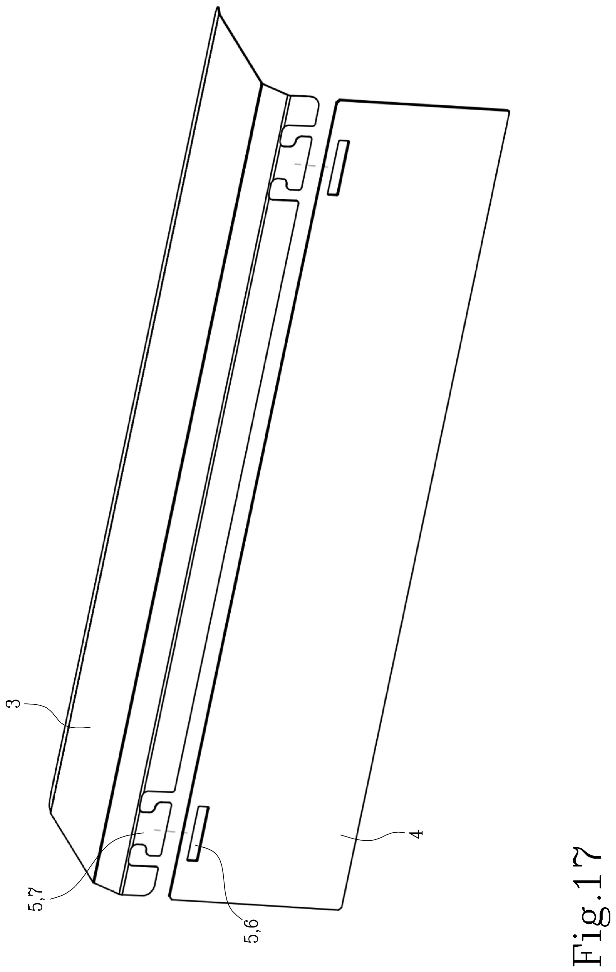

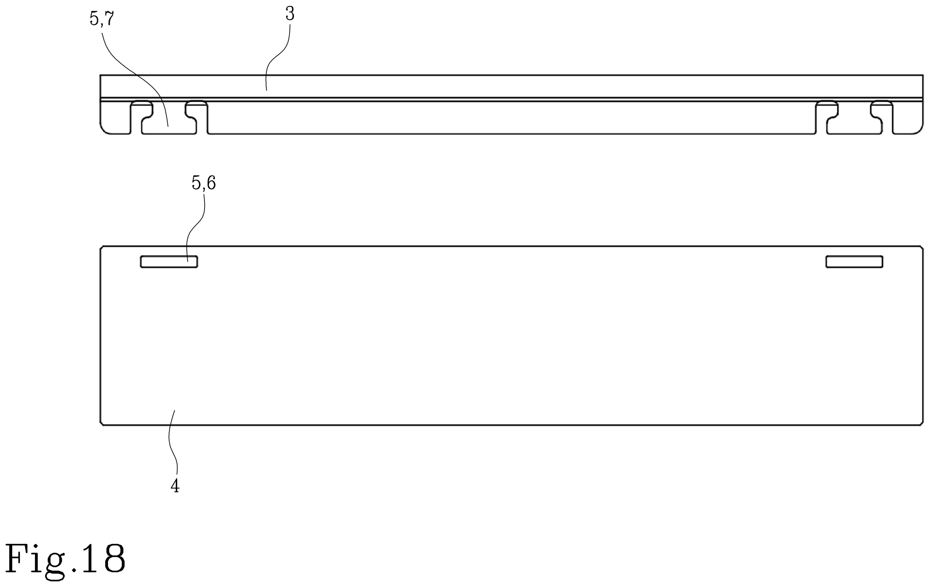

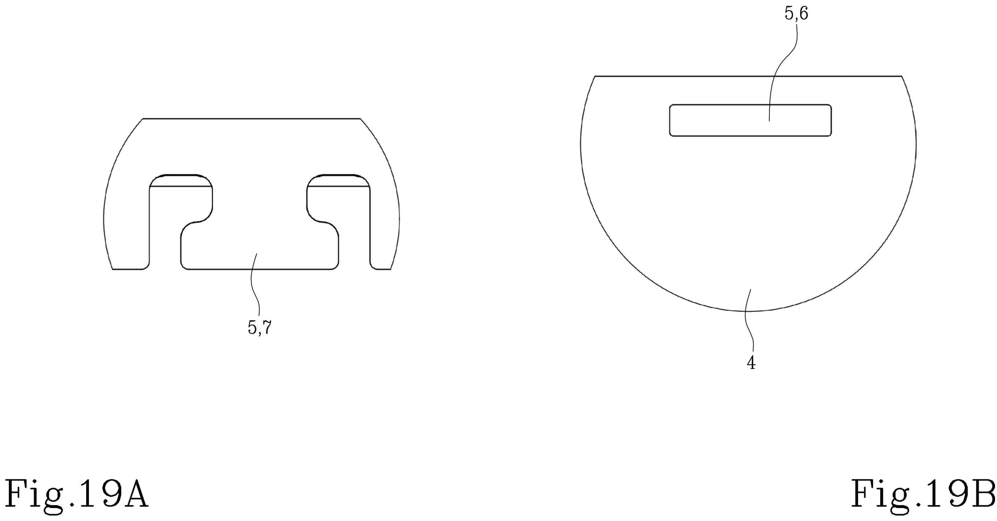

According to another aspect shown in figures 17 to 20, the coupling means comprise at least a slot obtained on the frame 4 and a coupling element 7 obtained on the lamella 3.

The slot 6 has a rectangular shape and its main extension axis is according to the main extension axis of the frame 7.

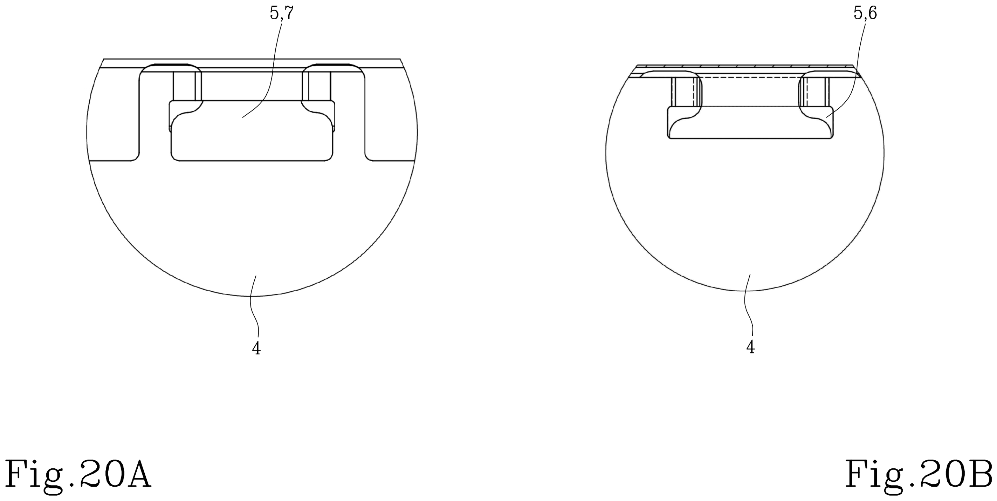

The snap-on coupling between frame 4 and lamella 3, as it is shown in detail in figures 20A and 20B, occurs at the respective coupling means 5.

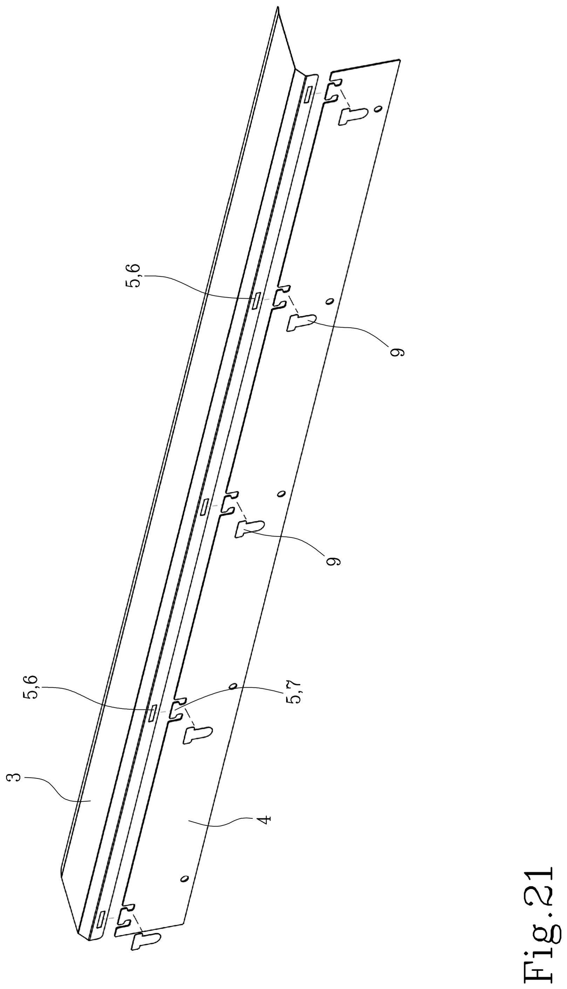

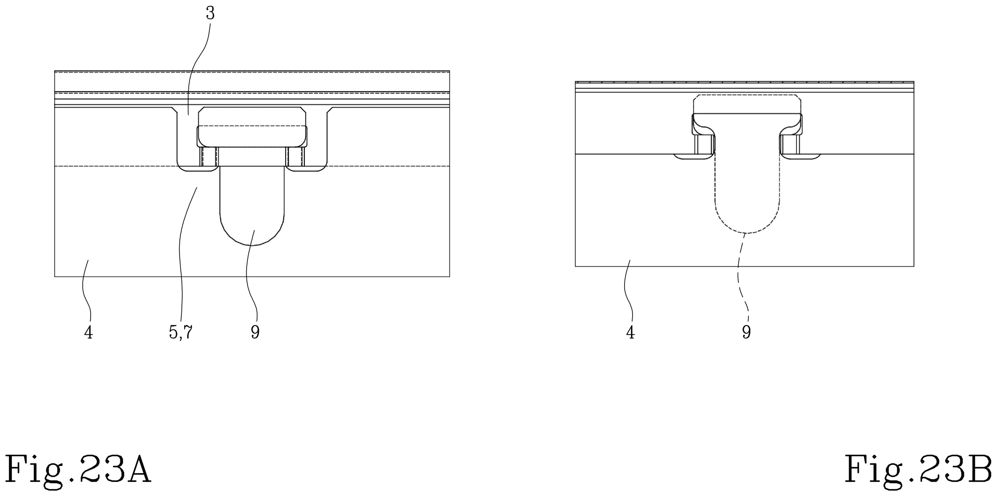

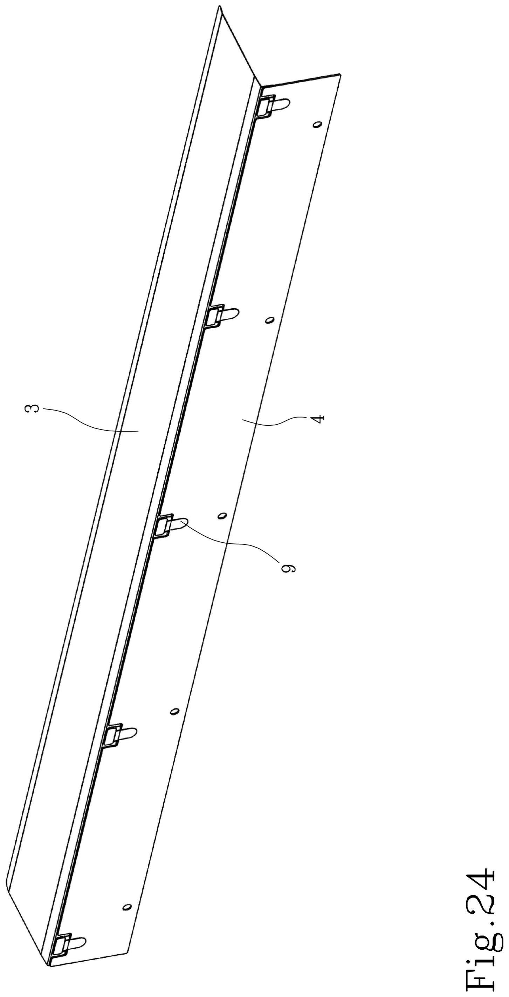

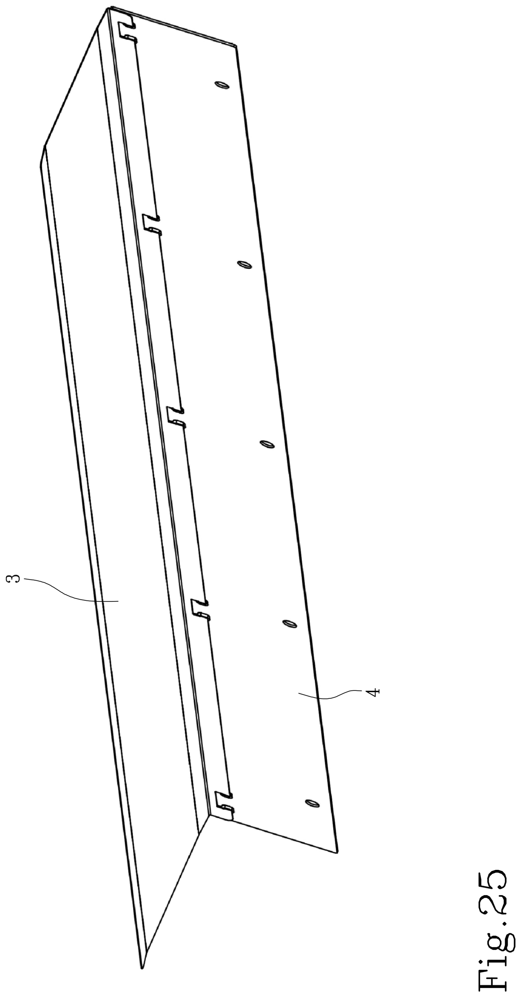

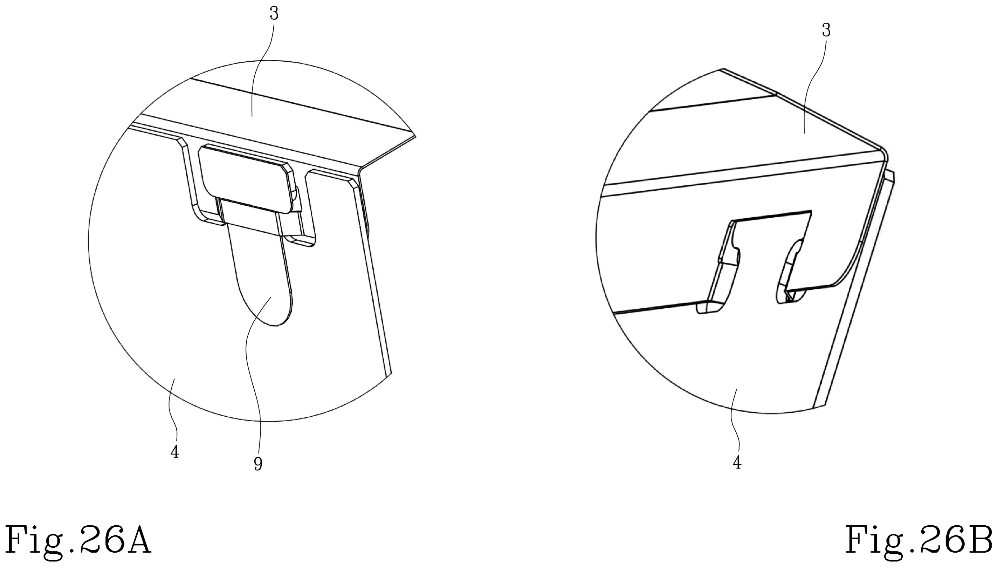

According to the embodiments shown in figure 21 and in figures 23A to 26B, the reinforcing element 9 is introduced in the slot 6 obtained on the lamella 3. The reinforcing element 9 is introduced in the slot 6 at the respective coupling element 7.

According to the above cited embodiments, the reinforcing element 9 has substantially elongated shape to a transverse direction to the main extension axis of the frame 4.

Preferably, the reinforcing element 9 has substantially elongated shape to an orthogonal direction to the main extension axis of the frame 4.

The reinforcing element 9 is introduced in the slot 6 of the lamella 3, and inside the same slot 6, it is introduced the coupling element 7. Advantageously, the introduction of the reinforcing element 9 allows to optimize and to make the coupling between lamella 3 and frame 4 more stable.

According to another embodiment not shown in the appended figures, the reinforcing element 9 has at least a pair of coupling protuberances arranged on the side wall of the same element. The coupling protuberances are transverse to a main extension direction of the reinforcing element 9.

Said coupling protuberances allow to increase the stability of the coupling between frame 4 and lamella 3 so that when the reinforcing element 9 is introduced in the slot 6 it does not allow further respective movements between frame 4 and lamella 3.

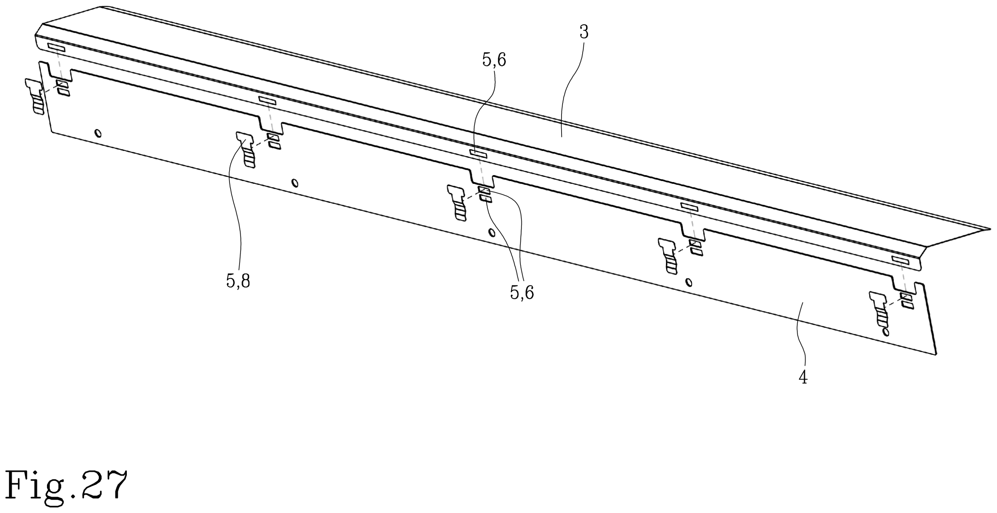

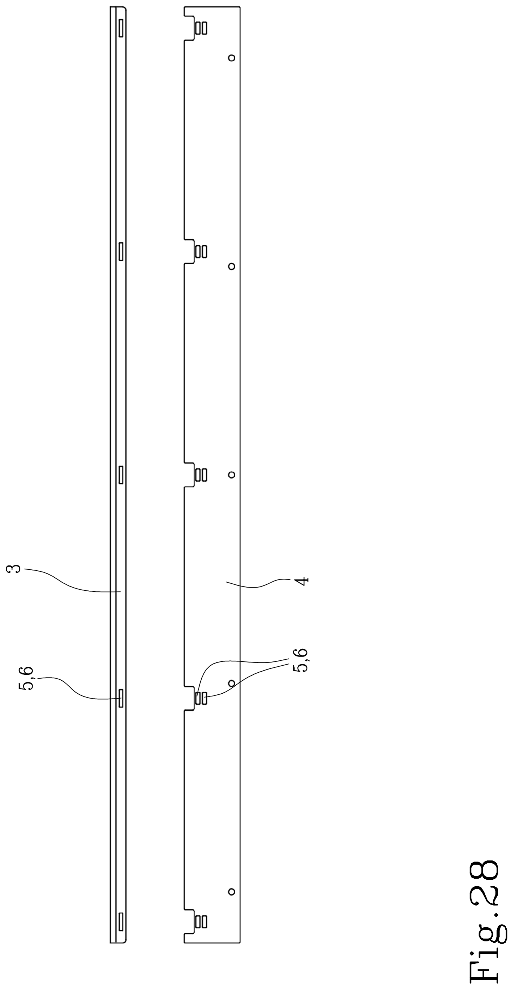

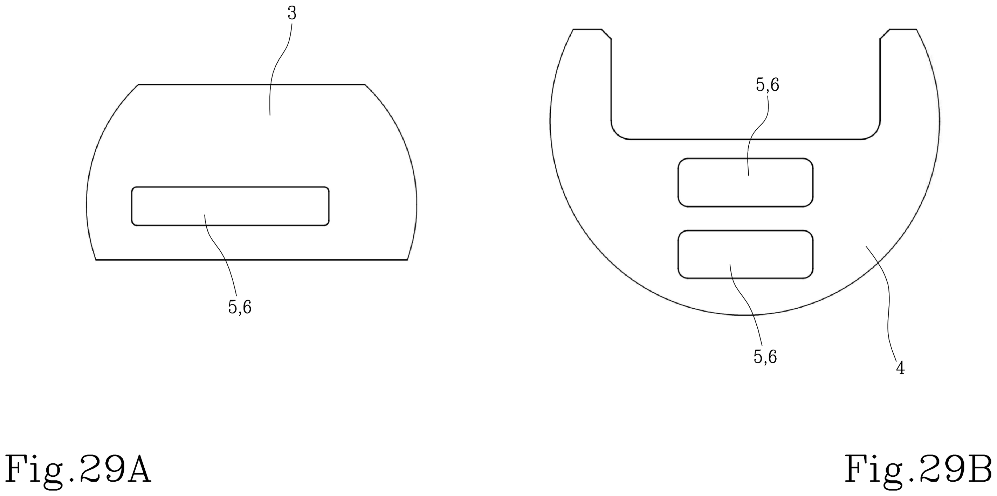

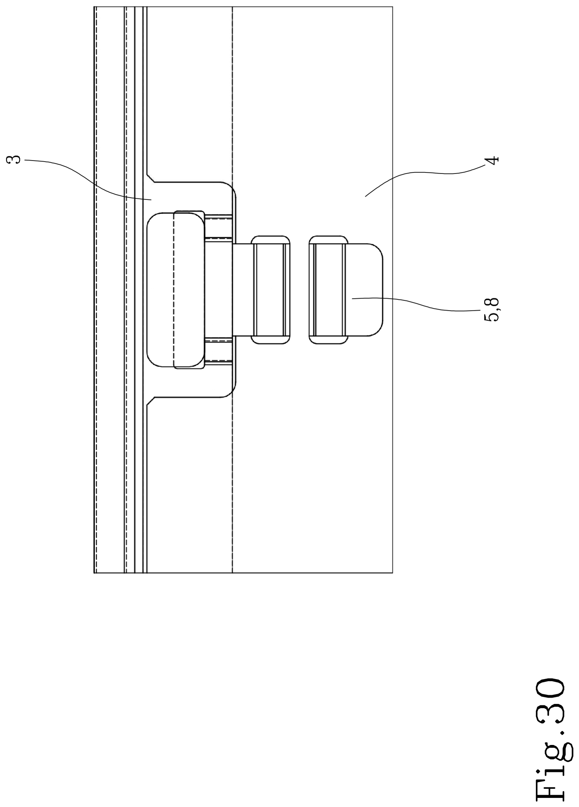

According to another aspect of the present description, according to figures 27 to 30, the device 1 comprises coupling means 5 comprising a plurality of slots 6.

The coupling means 5 comprise a plurality of slots 6 obtained on the lamella 3 and frame 4, respectively.

The coupling between lamella 3 and frame 4 occurs at the slot 6 obtained on the lamella 3 and at a pair of slots 6 obtained on the frame 4.

Each slot 6 of the pair of slots 6 obtained on the frame 4 is vertically aligned to the slot 6 of the same pair of slots 6.

Furthermore, according to the embodiment shown for example in figure 27, the coupling means 5 comprise a coupling element 8 provided as separated element (i.e. not part of the frame 4 and lamella 3).

The coupling element 8 is provided in the form of a latch having T shape. The latch provides the coupling between lamella 3 and frame 4.

The elongated portion of the latch is shaped and/or deformable so to be introduced inside the plurality of slots 6 obtained on the lamella 3 and on the frame 4.

In other words, the elongated portion of the latch is, while being used, introduced in the slot 6 obtained on the lamella 3 and in the two slots 6 obtained in the frame 4 to allow a coupling between lamella 3 and frame 4. Advantageously, the coupling element 8, provided in the form of a latch, is the only element needed to provide the coupling between lamella 3 and frame 4 to make up the protective module 2 of the device 1.

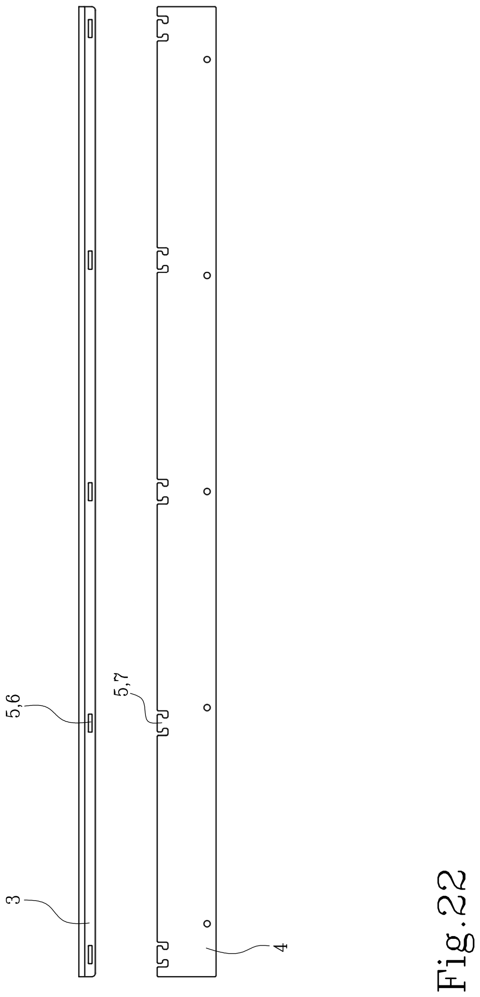

According to the embodiments shown for example in figure 2, 5, 8, 11, 12, 14, 15, 17, 18, 21, 22, 24 and 25, the frame 4 and the lamella 3 comprise a plurality of slots 6 and coupling elements 7.

The slots 6 and coupling elements 7 are respectively arranged on lamellae 3 and/or frames 4 in aligned way.

According to the shown embodiments, each lamella 3 comprises slots 6 or coupling elements 7. Each frame comprises slots 6 or coupling elements 7.

The protective module 2 comprises at least one frame 4 and one lamella 3, that are coupled by means of coupling means 5.

The coupling means 5 comprise a plurality of coupling elements 7, 8. The coupling elements 7, 8 are configured to be removably introduced in one of said slots 6 of the lamella 3 and/or frame 4.

According to the embodiment of the device 1 shown in figure 1, the device 1 has a plurality of protective modules 2.

Each protective module 2 of the plurality of protective modules 2 comprises a lamella 3 and a frame 4 and coupling means 5.

In usage, each frame 4 and each lamella 3 are coupled by means of coupling elements 7, 8 (preferably obtained on the same frame 4 and on the lamella 3).

Advantageously, the lamella 3 and the frame 4 are coupled by means of coupling means 5 obtained on the same lamella 3 and frame 4, so, such coupling avoids the usage of further fixing elements (as it occurred in the solutions of prior art).

Moreover, the above cited coupling between lamella 3 and frame 4 allows to reduce the dimensions due to the presence of fixing mechanisms that are traditionally interposed between lamella 3 and frame 4 in the protective module 2.

Furthermore, the thus obtained device 1 allows to limit the costs for maintenance, since it can be easily disassembled and so the single elements constituting the device 1 can be easily replaced.

Object of the present invention is also a processing machine comprising a processing head, an actuator and a device 1 object of the present invention.

The processing head of the processing machine comprises a processing tool.

The actuator is operatively connected to the processing head and is configured to move the processing head in an operating area.

The above described device 1 is connected to the processing head and is integrally movable with the processing head so as to cover at least a portion of the operating area.

Advantageously, the above described features of the device 1 allow to limit the dimensions due to the same device 1 and so allow the processing head, to which the device is fixed to, to arrive closer to the piece being processed.

Advantageously, the device 1 object of the present invention can be easily disassembled and so the usage of such device 1 guarantees to reduce the maintenance times needed in case of replacement of the elements of the same device 1.

## Claims

1. A protective device (1) comprising a protective module (2), the protective module (2) being **characterised in that** it comprises:
- at least one substantially L-shaped lamella (3);
- at least one frame (4) transversely arranged to said at least one lamella (3) and configured to be removably coupled to at least one lamella (3);
- coupling means (5) comprising at least one slot (6) made on the lamella (3) and/or on the frame (4) and a coupling element (7, 8), the coupling element (7, 8) being configured to be removably introduced in the cited at least one slot (6) of said lamella (3) and/or frame (4).

2. A device (1) according to the preceding claim, wherein the coupling element (7) is obtained on the lamella (3) and/or on the frame (4).

3. A device (1) according to the preceding claim, wherein the coupling means (5) comprise at least one slot (6) obtained on the lamella (3) and a coupling element (7) obtained on the frame (4).

4. A device (1) according to any one of the preceding claims, wherein the coupling element (7) has a first portion (7a) for the connection to the frame (4) and a second enlarged portion (7b) being distal to the frame (4).

5. A device (1) according to any one of the preceding claims, wherein the coupling means (5) comprise at least one slot (6) obtained on the frame (4) and a coupling element (7) obtained on the lamella (3).

6. A device (1) according to any one of the preceding claims, wherein, in usage, the lamella (3) is deformed to the frame (4) at the coupling means (5).

7. A device (1) according to the preceding claim, wherein said deformation of the lamella (3) to the frame (4) occurs at said at least one slot (6), on the lamella (3) and/or on the frame (4), and at a coupling element (7, 8), on the frame (4) and/or on the lamella (3).

8. A device (1) according to any one of the preceding claims, wherein said coupling means (5) are configured to provide a shape and/or a snap-on coupling between the slot (6) and the coupling element (7, 8).

9. A device (1) according to any one of the preceding claims, further comprising a reinforcing element (9) configured to be introduced in a slot (6) obtained on the lamella (3) and/or on the frame (4) so as to simplify the coupling between said lamella (3) and said frame (4).

10. A device (1) according to claim 9, wherein the reinforcing element (9) has at least a pair of coupling protuberances transverse to a main extension direction of the same reinforcing element (9).

11. A device (1) according to any one of the preceding claims, wherein the coupling means (5) comprise a plurality of slots (6) obtained on the lamella (3) and on the frame (4), respectively.

12. A device (1) according to any one of the preceding claims, wherein the coupling element (8) is provided in the form of a latch having a T shape, wherein an elongated portion is shaped or deformable so as to be introduced in said plurality of slots (6) obtained on the lamella (3) and on the frame (4).

13. A device (1) according to the preceding claim, wherein the coupling means (5) comprise a plurality of coupling elements (7, 8), each configured to be removably introduced in one of the cited slots (6) of said lamella (3) and/or frame (4).

14. A device (1) according to any one of the preceding claims, having a plurality of protective modules (2).

15. A processing machine comprising:
- a processing head, comprising a processing tool;
- an actuator, operatively connected to the processing head and configured to move the processing head in an operating area;
- a protective device (1) according to any one of the preceding claims, connected to said processing head, to be integrally movable with said processing head so as to cover at least a portion of said operating area.
